# EUROPÄISCHE PATENTSCHRIFT

(11) **EP 1 099 944 B1**
(45) Veröffentlichungstag und Bekanntmachung des Hinweises auf die Patenterteilung: **05.12.2007**
(21) Anmeldenummer: 00120991.5
(22) Anmeldetag: 27.09.2000
(51) Int. Cl.: G01K 17/06, G01K 1/02

(54) **Vorrichtung zur Erfassung des Energieverbrauchs einer Heizungsanlage**
Device for the acquisition of the energy consumption with respect to a heating installation
Dispositif de saisie de la consommation d'énergie se rapportant à une installation de chauffage

(30) Priorität: 12.11.1999 DE 19954579
(43) Veröffentlichungstag der Anmeldung: 16.05.2001
(73) Patentinhaber: Techem Energy Services GmbH, 65760 Eschborn (DE)
(72) Erfinder: Buck, Walter, 73635 Rudersberg (DE)
(74) Vertreter: Stadler, Heinz

(56) Entgegenhaltungen:
- EP-A- 0 619 620
- DE-A- 4 429 934

## Beschreibung

Die Erfindung betrifft eine Vorrichtung zur Erfassung des Energieverbrauchs einer Heizungsanlage gemäß dem Oberbegriff des Anspruchs 1.

Derartige Vorrichtungen (siehe z.B. EP-A-0 619 620 oder DE-A-4429934) dienen zur Erfassung der Heizkosten bei Heizungsanlagen, die insbesondere in Wohngebäuden mit mehreren Wohneinheiten installiert sein können. Dabei erfolgt die Erfassung der Heizkosten auf drahtlosem Weg zwischen Erfassungseinheiten, die an den Heizkörpern der Heizungsanlage angeordnet sind, und einer zentralen Empfangseinheit. Beispielsweise kann die Empfangseinheit auf dem Flur eines mehrere Wohneinheiten aufweisenden Wohnhauses angeordnet sein. Dadurch wird ein regelmäßiges Ablesen von Verbrauchszählern vermieden, wodurch insbesondere in Wohngebäuden eine zeitliche Koordination und Absprache der Bewohner des Wohngebäudes mit dem jeweiligen Ableser entfällt, da dieser nicht mehr die einzelnen Wohneinheiten betreten muss.

Die einzelnen Erfassungseinheiten sind an den einzelnen Heizkörpern angebracht und weisen jeweils ein Sensorelement, insbesondere einen Temperaturfühler, auf, mit welchem der Verbrauch des jeweiligen Heizkörpers gemessen wird. Die Ausgangssignale des Sensorelements werden über eine Antenne übertragen, wobei die Sendeleistung über einen Sender in die Antenne eingespeist wird.

Die Erfassungseinheit weist ein Gehäuse auf, in welchem das Sensorelement, der Sender und die Antenne sowie Bauteile zur Ansteuerung der einzelnen Komponenten und zur Stromversorgung vorgesehen sind. Insbesondere sind als Bauteile eine Batterie und ein Ladekondensator vorgesehen. Um eine hohe Verfügbarkeit der Vorrichtung zu erhalten, muss die wartungsfreie Betriebsdauer der Erfassungseinheiten ein Mehrfaches der Ableseintervalle betragen und liegt typischerweise in der Größenordnung von etwa 10 Jahren. Demzufolge werden Batterien mit entsprechender Kapazität und Lebensdauer für die einzelnen Erfassungseinheiten benötigt, so dass bereits aus diesem Grund die Batterien eine relativ große Bauhöhe aufweisen.

Gleichzeitig sollen die Erfassungseinheiten eine möglichst geringe Baugröße aufweisen, um platzsparend an den Heizkörpern montiert werden zu können. Bekannte Erfassungseinheiten sind dabei so konstruiert, dass ein das Sensorelement bildender Temperaturfühler auf der Oberfläche des Heizkörpers aufliegt. Der Temperaturfühler ist an der Unterseite einer Platine montiert. Auf deren Oberseite sind der Ladekondensator, die Batterie und der Sender montiert. Die Antenne ist beispielsweise von einem Stück Draht gebildet, der an der Oberseite der Platine ausmündet.

Um einen möglichst großen Wirkungsgrad der Antenne zu erhalten, soll deren Abstand zur leitenden Oberfläche des Heizkörpers möglichst groß sein, so dass die Antenne oberhalb der Bauelemente auf der Platine verlaufend angeordnet ist. Vorzugsweise sollte der Abstand wenigstens ein Viertel der Wellenlänge der von der Antenne abgestrahlten elektromagnetischen Wellen betragen. Problematisch hierbei ist jedoch, dass der Wirkungsgrad der Antenne durch die Bauelemente auf der Platine, insbesondere durch die Batterie und den Ladekondensator beeinträchtigt wird. Dabei ist insbesondere nachteilig, dass das elektrische Feld der Antenne an den Bauteilen auf der Platine endet. Damit durchdringt der zugehörige Verschiebungsstrom die Schaltungen auf der Platine sowie die Bauelemente, wodurch Störungen verursacht werden können. Zudem liegen die Verbindungsleitungen für den Anschluss des Temperaturfühlers im Nahfeld der Antenne und führen zu einer weiteren Beeinträchtigung des Wirkungsgrades der Antenne.

Da die Antenne stark auf diese Störeinflüsse in ihrem Umfeld reagiert, kann deren Wirkungsgrad nicht durch ein Anpassnetzwerk verbessert werden. Auch eine komplexere Struktur der Antenne selbst führt nicht zur Erhöhung des Wirkungsgrades, da derartige Strukturen nur bei Abmessungen von mehreren Wellenlängen der abgestrahlten elektromagnetischen Wellen wirken. Derartige Abmessungen der Antennen sind jedoch in derartigen Empfangseinheiten nicht realisierbar.

Um die Verminderung des Wirkungsgrades zu kompensieren muss daher die Sendeleistung des Senders entsprechend erhöht werden. Dies führt zu einem erhöhten Energiebedarf des Senders und damit zu einer größeren Batterie. Damit werden die Abmessungen der Erfassungseinheiten unerwünscht vergrößert. Zudem sind damit auch erhöhte Herstellkosten verbunden.

Der Erfindung liegt die Aufgabe zugrunde, eine Vorrichtung der eingangs genannten Art so auszubilden, dass bei einer möglichst geringen Baugröße ihrer Komponenten eine möglichst sichere drahtlose Übertragung von Funksignalen gewährleistet ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Bei der erfindungsgemäßen Vorrichtung weisen die Antennen der Erfassungseinheit jeweils eine Platine auf, die zum Anschluss des Senders dient. Vorteilhafterweise sind auch die übrigen Bauelemente, insbesondere eine Batterie, ein Ladekondensator sowie das Sensorelement an die Platine angeschlossen.

Ein wesentlicher Vorteil besteht bei dieser Anordnung darin, dass die Platine trotz geringer Baugröße der gesamten Erfassungseinheit in großem Abstand zur leitenden Oberfläche des zugeordneten Heizkörpers anbringbar ist, wodurch eine große wirksame Antennenhöhe erzielt wird. Die Platine ist dabei vorteilhaft über elektrische Anschlussmittel mit dem Heizkörper so gekoppelt, dass der Heizkörper und die Platine die beiden Äste eines Dipols bilden.

Besonders vorteilhaft befinden sich die Bauelemente der Erfassungseinheit, insbesondere der Sender, der Ladekondensator und die Batterie an der Oberseite der Platine, während die Unterseite der Platine in Abstand dem Heizkörper gegenüberliegt. Somit befinden sich im Zwischenraum zwischen der Platine und dem Heizkörper keine Bauelemente die zu Störungen des Nahfeldes der Antenne führen könnten.

In einer vorteilhaften Ausführungsform weist die Platine eine kupferkaschierte Unterseite auf. Zudem sind zweckmäßigerweise auf der Platine Strompfade zur kontrollierten Ableitung von Verschiebungsströmen vorgesehen. Durch diese Maßnahmen ist gewährleistet, dass der durch das Nahfeld der Antenne bedingte Verschiebungsstrom nicht unkontrolliert durch die Schaltungen und Bauelemente auf der Platine fließt, so dass dadurch bedingte Störungen weitgehend ausgeschlossen sind.

Die Erfindung wird im nachstehenden anhand der Zeichnungen erläutert. Es zeigen:
- Figur 1:: Schematische Darstellung einer Vorrichtung zur Erfassung des Energieverbrauchs an einer Heizungsanlage mit mehreren Erfassungseinheiten.
- Figur 2:: Aufbau eines ersten Ausführungsbeispiels einer Erfassungseinheit gemäß Figur 1.
- Figur 3:: Ausschnitt eines zweiten Ausführungsbeispiels einer Erfassungseinheit gemäß Figur 1.

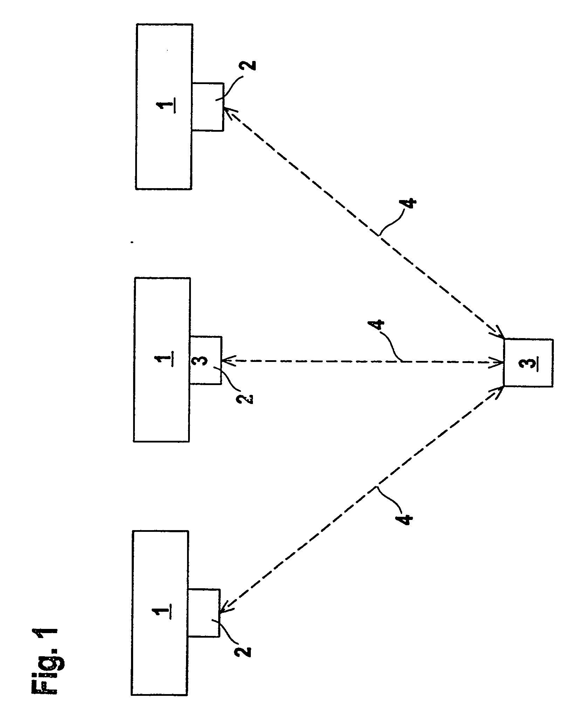

Figur 1 zeigt eine Vorrichtung zur Erfassung des Energieverbrauchs an einer Heizungsanlage. In diesem Ausführungsbeispiel umfasst die Heizungsanlage mehrere Heizkörper 1 in unterschiedlichen Wohneinheiten eines nicht dargestellten Wohngebäudes. Die Vorrichtung umfasst mehrere Erfassungseinheiten 2, wobei jeweils an einem der Heizkörper 1 eine Erfassungseinheit 2 angebracht ist. Zudem weist die Vorrichtung eine zentrale Empfangseinheit 3 auf, die sich im vorliegenden Ausführungsbeispiel in einem Flur des Wohngebäudes befindet.

Mittels der Erfassungseinheiten 2 wird jeweils fortlaufend der Energieverbrauch an dem jeweiligen Heizkörper 1 ermittelt und in vorgegebenen Zeitintervallen in Form von Funksignalen 4 an die Empfangseinheit 3 übertragen. Vorzugsweise werden auch von der Empfangseinheit Signale an die Erfassungseinheiten ausgesandt. Von der Empfangseinheit 3 können die aufgelaufenen Heizkosten, die sich aus dem Energieverbrauch der einzelnen Heizkörper 1 ergeben, zentral abgerufen werden.

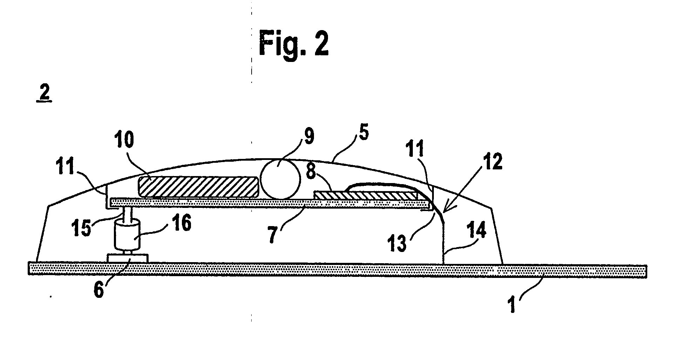

Der Aufbau eines ersten Ausführungsbeispiels einer Erfassungseinheit 2 der erfindungsgemäßen Vorrichtung ist in Figur 2 dargestellt. Die Erfassungseinheit 2 ist in einem Gehäuse 5 integriert, welches diese seitlich und zur Oberseite hin abschließt. Die an der Unterseite offene Erfassungseinheit 2 sitzt auf der leitenden Oberfläche des jeweiligen Heizkörpers 1 auf.

Die Erfassungseinheit 2 weist ein Sensorelement zur Messung des Energieverbrauchs des Heizkörpers 1 auf. Im vorliegenden Ausführungsbeispiel ist das Sensorelement von einem Temperaturfühler 6 gebildet, welcher den Energieverbrauch über die Temperatur an der Heizkörperoberfläche misst.

Zudem weist die Erfassungseinheit 2 eine Platine 7 zur Aufnahme von Bauelementen auf. Die Bauelemente sind insbesondere von einem Sender 8, einer Batterie 9 und einem Ladekondensator 10 gebildet. Auf der Platine 7 sind nicht dargestellte Leiterbahnen und Schaltungen aufgebracht, die insbesondere zum Anschluss und Betrieb der vorgenannten Bauelemente dienen.

Die Platine 7 ist an Halterungen 11 gelagert, die von den Innenwänden des Gehäuses 5 hervorstehen, so dass die Unterseite der Platine 7 in Abstand und parallel zur ebenen Oberfläche des Heizkörpers 1 verläuft. Die Bauelemente, insbesondere der Sender 8, die Batterie 9 und der Ladekondensator 10, sitzen auf der Oberseite der Platine 7 auf. Dabei ist die Bauhöhe des Gehäuses 5 so gewählt, dass die Bauelemente dicht unterhalb der Decke des Gehäuses 5 liegen.

Erfindungsgemäß dient die Platine 7 als Antenne zur Übertragung der Funksignale 4 an die Empfangseinheit 3. Zum Betrieb der Antenne wird in die Antennenkonfigurationen bestehend aus Platine 7 und Heizkörperoberfläche vom Sender 8 Hochfrequenzleistung eingespeist, wobei die Frequenzen vorzugsweise im Bereich von etwa 430-440 MHz, zweckmäßigerweise bei 433 MHz liegen. Prinzipiell können die Frequenzen auch niedriger oder höher liegen. Vorzugsweise können dabei Frequenzen im UHF Band verwendet werden. Die Energieversorgung erfolgt dabei über die Batterie 9, die ausreichend dimensioniert ist, so dass eine wartungsfreie Betriebsdauer von typischerweise etwa 10 Jahren gewährleistet ist. Diese Betriebsdauer beträgt damit ein Mehrfaches der Ableseintervalle der Empfangseinheit 3.

Die Einkopplung der Hochfrequenzleistung des Senders 8 in die Antenne erfolgt über ein koaxiales Kabel 12. Das koaxiale Kabel 12 bildet bei dem in Figur 2 dargestellten Ausführungsbeispiel auch ein elektrisches Anschlussmittel, mit welchem die Platine 7 und der Heizkörper 1 gekoppelt sind. Dabei ist der Außenleiter 13 des koaxialen Kabels 12 mit der Platinenmasse verbunden. Das andere freie Ende des koaxialen Kabels 12 ist zum Heizkörper 1 geführt. Dort sind die Innenleiter 14 des koaxialen Kabels 12 mit dem Heizkörper 1 verbunden. Der Außenleiter 13 endet vor dem Heizkörper 1.

In einer alternativen nicht dargestellten Ausführungsform kann der Anschluss an den Heizkörper 1 über eine kapazitive Anordnung erfolgen. Die kapazitive Anordnung weist dabei vorzugsweise ein dicht an den Heizkörper 1 angepresstes Blechteil auf. Liegt die Hochfrequenzleistung des Senders 8 beispielsweise bei 433 MHz, so beträgt die Kapazität der kapazitiven Anordnung vorzugsweise etwa 100 pF.

Damit die Fläche des hierbei verwendeten Blechteils möglichst klein gehalten werden kann, ist dieses möglichst dicht gegen den Heizkörper 1 gepresst.

Durch die Kopplung der Platine 7 und des Heizkörpers 1 über die elektrischen Anschlussmittel bilden die Platine 7 und der Heizkörper 1 die Äste eines Dipols. Der Aufbau der Antenne entspricht dabei einem Dipol mit Dachkapazität, wobei sich die Anschaltung des Senders 8 in der Dachkapazität befindet. Durch eine hinreichend große Dimensionierung des Abstandes des Heizkörpers 1 zur Platine 7 wird eine mit hohem Wirkungsgrad arbeitende Antenne erhalten. Besonders vorteilhaft ist, dass sich die Bauelemente der Platine 7 an deren Oberseite befinden, nicht jedoch im Zwischenraum zwischen der Platine 7 und des Heizkörpers 1. Dies führt zu einer weiteren Erhöhung des Wirkungsgrades der Antenne.

Weiterhin ist vorteilhaft, dass die elektrischen Anschlussmittel zur Kopplung an den Heizkörper 1 nicht von der Platinenmitte sondern von deren Rand ausmünden und auf den Heizkörper 1 zulaufen. Auf diese Weise wird eine langgestreckte Antennenanordnung erhalten. Der sich über die Antennenkapazität schließende Verschiebungsstrom bildet durch die langgestreckte Anordnung die größtmögliche Schleife, die als magnetische Antenne wirkt und zur Energieabstrahlung beiträgt.

Wie aus Figur 2 ersichtlich ist, sind die elektrischen Anschlussmittel zur Ankopplung an den Heizkörper 1 an einem Ende der Platine 7 in deren Randbereich angeordnet. Am anderen Ende der Platine 7 sind ebenfalls im Randbereich der Platine 7 Anschlussmittel für den Anschluss des Temperaturfühlers 6 vorgesehen. Bei der in Figur 2 dargestellten Ausführungsform führen Leitungen 15 vom Temperaturfühler 6 zur Platine 7, wobei die Leitungen 15 von einem Ferritkern 16 umgeben sind. Die Leitungen 15 sind dabei auf das Potential des Senders 8 gebracht. Vorteilhafterweise sind die Leitungen 15 mit dem Ferritkern 16 an einer Stelle geringer Feldstärke angeordnet. Die so ausgebildeten Anschlussmittel beeinträchtigen das Nahfeld der Antenne nur geringfügig.

Zweckmäßigerweise weist die Platine 7 eine nicht dargestellte kupferkaschierte Unterseite auf. Dadurch wird erreicht, dass die durch das Antennenfeld bewirkten Verschiebungsströme auf der Platine 7 weitgehend von den auf der Platine 7 angeordneten Bauelementen ferngehalten werden. Dieser Effekt wird zweckmäßigerweise dadurch noch verstärkt, dass auf der Platine 7 Strompfade vorgesehen sind, über welche die Verschiebungsströme kontrolliert abgeleitet werden können. Die Strompfade sind vorteilhafterweise in Form von leitenden Verbindungen zwischen unterschiedlichen Masseflächen auf der Platine 7 gebildet.

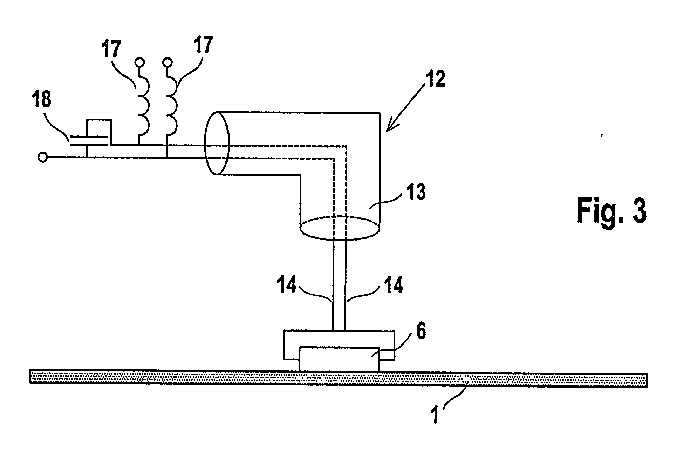

Figur 3 zeigt einen Ausschnitt eines zweiten Ausfühnmgsbeispiels einer Erfassungseinheit 2. In dieser Abbildung sind die Anschlussmittel zum Anschluss des Temperaturfühlers 6 an die Platine 7 sowie die elektrischen Anschlussmittel zur Kopplung der Platine 7 an den Heizkörper 1 dargestellt.

Die Platine 7 mit den darauf angeordneten Bauelementen sowie das zugehörige Gehäuse 5 entsprechen in ihrem Aufbau dem Ausführungsbeispiel gemäß Figur 2 und sind in Figur 3 nicht dargestellt.

Bei dem in Figur 3 dargestellten Ausführungsbeispiel erfolgt der Anschluss des Temperaturfühlers 6 und die Kopplung des Heizkörpers 1 an die Platine 7 gemeinsam über ein koaxiales Kabel 12. Der Temperaturfühler 6 sitzt auf der Oberfläche des Heizkörpers 1 auf. Die Innenleiter 14 des koaxialen Kabels 12 sind an gegenüberliegenden Enden des Temperaturfühlers 6 angeschlossen. Der Außenleiter 13 des koaxialen Kabels 12 endet dicht vor dem Temperaturfühler 6. Das gegenüberliegende Ende des koaxialen Kabels 12 weist zwei Anschlüsse an die Platine 7 auf.

Der erste Anschluss weist zwei Spulen 17 auf, wobei jeweils einer der Innenleiter 14 über eine der Spulen 17 zur Platine 7 geführt ist. Dieser Anschluss dient zur Ankopplung des Temperaturfühlers 6 an die Platine 7.

Der zweite Anschluss dient zur Ankopplung des Heizkörpers 1 an die Platine 7 und ist Bestandteil der elektrischen Anschlussmittel. Dieser Anschluss weist ein kapazitives Koppelelement 18 auf, welches die freien Enden der Innenleiter 14 des koaxialen Kabels 12 verbindet. Über den so gebildeten Anschluss erfolgt die Kopplung an diskrete Bauelemente oder eine Leitungsschaltung auf der Platine 7.

Die Kombination beider Anschlussmittel über ein koaxiales Kabel 12 ist deshalb möglich, da die beiden Anschlussmittel für völlig unterschiedliche Frequenzen ausgelegt sind. Während über die elektrischen Anschlussmittel die Hochfrequenzleistung des Senders 7 eingekoppelt wird, werden über das koaxiale Kabel 12 als Anschluss für den Temperaturfühler 6 nur niederfrequente Signale übertragen. Somit kann bei dem Ausführungsbeispiel gemäß Figur 3 für beide Anschlussmittel dasselbe koaxiale Kabel 12 verwenden werden, ohne dass gegenseitige Störungen oder Beeinträchtigungen zu befürchten sind.

### Bezugszeichenliste

- (1): Heizkörper
- (2): Erfassungseinheit
- (3): Empfangseinheit
- (4): Funksignal
- (5): Gehäuse
- (6): Temperaturfühler
- (7): Platine
- (8): Sender
- (9): Batterie
- (10): Ladekondensator
- (11): Halterung
- (12): koaxiales Kabel
- (13): Außenleiter
- (14): Innenleiter
- (15): Leitung
- (16): Ferritkern
- (17): Spule
- (18): kapazitives Koppelelement

## Patentansprüche

1. Vorrichtung zur Erfassung des Energieverbrauchs einer einen oder mehrere Heizkörper aufweisenden Heizungsanlage, wobei zur Ermittlung des Energieverbrauchs eines Heizkörpers an diesem eine Erfassungseinheit (2) mit einem Sensorelement (6), einem Sender (8) und einer Antenne vorgesehen ist, wobei die Ausgangssignale des Sensorelements über die vom Sender gespeiste Antenne zu einer Empfangseinheit (3) übertragen werden, **dadurch gekennzeichnet, dass** die Antenne eine Platine (7) aufweist, auf welcher der Sender (8) aufgebracht ist.

2. Vorrichtung nach Anspruch 1, **dadurch gekennzeichnet, dass** der Sender (8) auf der Oberseite der Platine (7) aufsitzt und deren Unterseite in Abstand der Oberfläche des Heizkörpers (1) gegenüberliegt.

3. Vorrichtung nach einem der Ansprüche 1 oder 2, **dadurch gekennzeichnet, dass** auf der Oberseite der Platine (7) weitere elektronische Bauelemente aufsitzen.

4. Vorrichtung nach Anspruch 3, **dadurch gekennzeichnet, dass** als Bauelemente eine Batterie (9) und ein Ladekondensator (10) vorgesehen sind.

5. Vorrichtung nach einem der Ansprüche 1 - 4, **dadurch gekennzeichnet, dass** das Sensorelement von einem auf der Oberfläche des Heizkörpers (1) aufsitzenden Temperaturfühler (6) gebildet ist.

6. Vorrichtung nach einem der Ansprüche 2 - 5, **dadurch gekennzeichnet, dass** die Platine (7) und die dieser gegenüberliegende Oberfläche des Heizkörpers (1) über elektrische Anschlussmittel gekoppelt sind, so dass die Platine (7) und der Heizkörper (1) die Äste eines Dipols bilden.

7. Vorrichtung gemäß Anspruch 6, **dadurch gekennzeichnet, dass** die elektrischen Anschlussmittel am Rand der Platine (7) ausmünden.

8. Vorrichtung nach einem der Ansprüche 6 oder 7, **dadurch gekennzeichnet, dass** die elektrischen Anschlussmittel von einer kapazitiven Anordnung gebildet sind.

9. Vorrichtung nach Anspruch 8, **dadurch gekennzeichnet, dass** die kapazitive Anordnung ein dicht am Heizkörper (1) angepresstes Blechteil aufweist.

10. Vorrichtung nach einem der Ansprüche 6 oder 7, **dadurch gekennzeichnet, dass** als elektrisches Anschlussmittel ein koaxiales Kabel (12) vorgesehen ist, wobei dessen Außenleiter (13) an einem Ende des koaxialen Kabels (12) mit der Platinenmasse verbunden ist und am anderen Ende die Innenleiter (14) des koaxialen Kabels (12) mit dem Heizkörper (1) verbunden sind, wobei der Außenleiter (13) vor dem Heizkörper (1) endet.

11. Vorrichtung nach Anspruch 10, **dadurch gekennzeichnet, dass** das koaxiale Kabel (12) zusätzlich ein Anschlussmittel für den Anschluss des Temperaturfühlers (6) an die Platine (7) bildet.

12. Vorrichtung nach Anspruch 11, **dadurch gekennzeichnet, dass** an einem Ende des koaxialen Kabels (12) dessen Innenleiter (14) auf den auf dem Heizkörper (1) aufsitzenden Temperaturfühler (6) geführt sind, und dass am anderen Ende des Koaxialkabels (12) die Innenleiter (14) jeweils über ein Siebmittel als Anschluss für den Temperaturfühler (6) zur Platine (7) geführt sind und die freien Enden der Innenleiter (14) über ein kapazitives Koppelelement (18) zum Anschluss an den Sender (8) auf die Platine (7) geführt sind.

13. Vorrichtung nach einem der Ansprüche 2 - 12, **dadurch gekennzeichnet, dass** von der Oberfläche des Heizkörpers und/oder von dort aufsitzenden Bauelementen zur Platine geführte Leitungen von einem Ferritkern umgeben sind.

14. Vorrichtung nach einem der Ansprüche 2 - 13, **dadurch gekennzeichnet, dass** die Platine (7) eine kupferkaschierte Unterseite aufweist.

15. Vorrichtung nach einem der Ansprüche 1 - 13, **dadurch gekennzeichnet, dass** auf der Platine (7) Strompfade zur Ableitung von Verschiebungsströmen vorgesehen sind.

16. Vorrichtung nach einem der Ansprüche 1 - 15, **dadurch gekennzeichnet, dass** die Komponenten einer Erfassungseinheit (2) in einem Gehäuse (5) integriert sind.

17. Vorrichtung nach Anspruch 16, **dadurch gekennzeichnet, dass** an der Innenseite des Gehäuses (5) Halterungen (11) zur Aufnahme der Platine (7) vorgesehen sind, so dass die Unterseite der Platine (7) im wesentlichen parallel zur Oberfläche des Heizkörpers (1) verläuft.

18. Vorrichtung nach einem der Ansprüche 1 - 17, **dadurch gekennzeichnet, dass** zwischen jeweils einer Erfassungseinheit (2) und einer zentralen, stationär angeordneten Empfangseinheit (3) in vorgegebenen Zeitintervallen bidirektionale Funksignale (4) übertragen werden.

## Claims

1. Device for detecting power consumption in a heating system comprising one or a plurality of heating bodies, wherein in order to determine the power consumption of a heating body a detection unit (2) with a sensor element (6), with a transmitter (8) and with an antenna is provided on this heating body, wherein the output signals of the sensor element are transmitted via the antenna supplied by the transmitter to a reception unit (3), **characterised in that** the antenna has a plate (7) to which the transmitter (8) is attached.

2. Device as claimed in claim 1, **characterised in that** the transmitter (8) is positioned on the upper side of the plate (7) and the lower side of the plate lies opposite the surface of the heating body (1), at a spaced interval.

3. Device as claimed in any one of claims 1 or 2, **characterised in that** further electronic components are positioned on the upper side of the plate (7).

4. Device as claimed in claim 3, **characterised in that** a battery (9) and a charging capacitor (10) are provided as components.

5. Device as claimed in any one of claims 1 - 4, **characterised in that** the sensor element is formed by a temperature sensor (6) positioned on the surface of the heating body (1).

6. Device as claimed in any one of claims 2 - 5, **characterised in that** the plate (7) and the surface of the heating body (1) opposite to the plate are coupled via electrical connection means so that the plate (7) and the heating body (1) form the arms of a dipole.

7. Device as claimed in claim 6, **characterised in that** the electrical connection means issue at the edge of the plate (7).

8. Device as claimed in any one of claims 6 or 7, **characterised in that** the electrical connection means are formed by a capacitive arrangement.

9. Device as claimed in claim 8, **characterised in that** the capacitive arrangement has a sheet metal part pressed closely against the heating body (1).

10. Device as claimed in any one of claims 6 or 7, **characterised in that** a coaxial, cable (12) is provided as the electrical connection means, wherein its outer conductor (13) is connected to the plate mass at the end of the coaxial cable (12) and at the other end the inner conductors (14) of the coaxial cable (12) are connected to the heating body (1), wherein the outer conductor (13) terminates upstream of the heating body (1).

11. Device as claimed in claim 10, **characterised in that** the coaxial cable (12) additionally forms a connection means for connection of the temperature sensor (6) to the plate (7).

12. Device as claimed in claim 11, **characterised in that** at one end of the coaxial cable (12) its inner conductors (14) lead to the temperature sensor (6) positioned on the heating body (1), and that at the other end of the coaxial cable (12) the inner conductors (14) respectively lead via a filtering means as a connection for the temperature sensor (6) to the plate (7) and the free ends of the inner conductors (14) lead to the plate (7) via a capacitive coupling element (18) for connection to the transmitter (8).

13. Device as claimed in any one of claims 2 - 12, **characterised in that** from the surface of the heating body and/or from components positioned thereon lines leading to the plate are surrounded by a ferrite core.

14. Device as claimed in any one of claims 2 - 13, **characterised in that** the plate (7) has a copper-covered lower side.

15. Device as claimed in any one of claims 1 - 13, **characterised in that** current paths are provided on the plate (7) for derivation of displacement currents.

16. Device as claimed in any one of claims 1 - 15, **characterised in that** the components of a detection unit (2) are integrated into a housing (5).

17. Device as claimed in claim 16, **characterised in that** on the inner side of the housing (5) holders (11) for receiving the plate (7) are provided so that the lower side of the plate (7) extends substantially in parallel with the surface of the heating body (1).

18. Device as claimed in any one of claims 1 - 17, **characterised in that** bidirectional radio signals (4) are transmitted at predetermined time intervals between a respective detection unit (2) and a central stationary reception unit (3).

## Revendications

1. Dispositif d'enregistrement de la consommation d'énergie d'une installation de chauffage comportant un ou plusieurs radiateurs, sachant que pour déterminer la consommation d'énergie d'un radiateur, il est prévu sur celui-ci une unité d'enregistrement (2) avec un capteur (6), un émetteur (8) et une antenne, les signaux de sortie du capteur étant transmis vers une unité de réception (3) via l'antenne alimentée par l'émetteur, **caractérisé en ce que** l'antenne comporte une platine (7) sur laquelle est agencé l'émetteur (8).

2. Dispositif selon la revendication 1, **caractérisé en ce que** l'émetteur (8) est posé sur la face supérieure de la platine (7) et la face inférieure de celle-ci est située à distance en face de la surface du radiateur (1).

3. Dispositif selon la revendication 1 ou 2, **caractérisé en ce que** d'autres éléments électroniques sont posés sur la face supérieure de la platine (7).

4. Dispositif selon la revendication 3, **caractérisé en ce que** les éléments prévus sont une batterie (9) et un condensateur de charge (10).

5. Dispositif selon l'une quelconque des revendications 1 à 4, **caractérisé en ce que** le capteur est formé par une sonde de température (6) posée sur la surface du radiateur (1).

6. Dispositif selon l'une quelconque des revendications 2 à 5, **caractérisé en ce que** la platine (7) et la surface du radiateur (1), située en face de celle-ci, sont couplées par l'intermédiaire de moyens de branchement électriques, de telle sorte que la platine (7) et le radiateur (1) forment les branches d'un dipôle.

7. Dispositif selon la revendication 6, **caractérisé en ce que** les moyens de branchement électriques débouchent sur le bord de la platine (7).

8. Dispositif selon la revendication 6 ou 7, **caractérisé en ce que** les moyens de branchement électriques sont formés par un agencement capacitif.

9. Dispositif selon la revendication 8, **caractérisé en ce que** l'agencement capacitif comporte une tôle pressée étroitement contre le radiateur (1).

10. Dispositif selon la revendication 6 ou 7, **caractérisé en ce que** pour le moyen de branchement électrique, il est prévu un câble (12) coaxial, le conducteur externe (13) à une extrémité du câble (12) coaxial étant relié à la masse de la platine et les conducteurs internes (14) sur l'autre extrémité du câble (12) coaxial étant reliés au radiateur (1), le conducteur externe (13) se terminant devant le radiateur (1).

11. Dispositif selon la revendication 10, **caractérisé en ce que** le câble (12) coaxial forme, en plus, un moyen de branchement pour raccorder la sonde de température (6) à la platine (7).

12. Dispositif selon la revendication 11, **caractérisé en ce que** sur une extrémité du câble (12) coaxial, les conducteurs internes (14) de celui-ci sont guidés vers la sonde de température (6) posée sur le radiateur (1), et **en ce que** sur l'autre extrémité du câble (12) coaxial, les conducteurs internes (14) sont guidés chacun vers la platine (7) via un moyen de filtrage sous la forme d'un raccord pour la sonde de température (6), et les extrémités libres des conducteurs internes (14) sont guidées vers la platine (7) via un élément de couplage (18) capacitif, destiné au raccordement à l'émetteur (8).

13. Dispositif selon l'une quelconque des revendications 2 à 12, **caractérisé en ce que** des lignes guidées vers la platine depuis la surface du radiateur et/ou depuis des éléments montés sur ladite surface sont entourées par un noyau de ferrite.

14. Dispositif selon l'une quelconque des revendications 2 à 13, **caractérisé en ce que** la platine (7) comporte une face inférieure revêtue de cuivre.

15. Dispositif selon l'une quelconque des revendications 1 à 13, **caractérisé en ce que** des voies de courant sont prévues sur la platine (7) pour dériver des courants de déplacement.

16. Dispositif selon l'une quelconque des revendications 1 à 15, **caractérisé en ce que** les composants d'une unité d'enregistrement (2) sont intégrés dans un boîtier (5).

17. Dispositif selon la revendication 16, **caractérisé en ce que** des fixations (11), destinées à recevoir la platine (7), sont prévues sur la face intérieure du boîtier (5), de telle sorte que la face inférieure de la platine (7) soit orientée sensiblement parallèlement à la surface du radiateur (1).

18. Dispositif selon l'une quelconque des revendications 1 à 17, **caractérisé en ce que** des signaux radio (4) bidirectionnels sont transmis à intervalles de temps prédéfinis entre respectivement une unité d'enregistrement (2) et une unité de réception (3) centrale stationnaire.
